## Europäisches Patentamt

## European Patent Office

## Office européen des brevets

(11) Veröffentlichungsnummer: **0 258 646**
**B1**

(12) **EUROPÄISCHE PATENTSCHRIFT**

(45) Veröffentlichungstag der Patentschrift:
26.09.90

(51) Int. Cl.⁵: **F16M 11/20, F16M 11/32**

(21) Anmeldenummer: **87111099.5**

(22) Anmeldetag: **31.07.87**

(54) Stativ für optische Geräte.

(30) Priorität: **01.09.86 DE 3629670**

(43) Veröffentlichungstag der Anmeldung:
**09.03.88 Patentblatt 88/10**

(45) Bekanntmachung des Hinweises auf die Patenterteilung:
**26.09.90 Patentblatt 90/39**

(84) Benannte Vertragsstaaten:
**AT CH ES FR GB IT LI SE**

(56) Entgegenhaltungen:
**DE-C- 730 340**
**FR-A- 550 853**
**FR-A- 1 308 733**
**US-A- 2 054 600**
**US-A- 3 300 165**
**US-A- 4 377 269**

(73) Patentinhaber: **CULLMANN HANDELSGESELLLSCHAFT FÜR VERBRAUCHSGÜTER M.B.H., Waldstrasse 12, D-8506 Langenzenn-Laubendorf(DE)**

(72) Der Erfinder hat auf seine Nennung verzichtet

(74) Vertreter: **LOUIS, PÖHLAU, LOHRENTZ & SEGETH, Kesslerplatz 1 Postfach 3055, D-8500 Nürnberg-1(DE)**

## Beschreibung

Die Erfindung betrifft ein Stativ für optische Geräte, mit Tragelementen, die an einer Mittelachse in axialer Richtung nebeneinander angeordnet und um die Mittelachse zwischen einer Ruheposition und einer Gebrauchsposition verdrehbar sind, wobei an den Tragelementen Stativbeine schwenkbar gelagert sind, die in der Ruheposition zur Mittelachse zumindest annähernd parallel ausgerichtet sind und in einer Ebene liegen und die in der Gebrauchsposition von den zugehörigen Tragelementen wegspreizbar sind.

Ein derartiges Stativ ist aus der FR-A 550 853 bekannt. Dieses Stativ weist für drei Stativbeine zwei Tragelemente auf. Die Mittelachse des Stativs verläuft durch das eine Tragelement mittig hindurch. Durch das zweite Tragelement verläuft die Mittelachse am einen Endabschnitt desselben. Die Befestigung des optischen Gerätes erfolgt bei diesem Stativ nicht fluchtend mit der genannten Mittelachse, sondern gegen diese Mittelachse seitlich versetzt. Zur Befestigung des optischen Gerätes ist im zweiten Tragelement eine Befestigungseinrichtung vorgesehen. Die Mittel achse dient dort nur zur verdrehbaren Verbindung der beiden Tragelemente.

Die US-A 20 54 600 beschreibt ein Stativ mit einer Mittelachse, um welche drei Stativbeine um 360 Grad schwenkbar angeordnet sind. Die Stativbeine sind mit den Tragelementen einstückig ausgebildet.

Aus der US-A 43 77 269 ist ein Stativ bekannt, bei dem die Tragelemente um die Mittelachse zwischen einer Ruheposition und einer Gebrauchsposition verstellbar sind. In der Ruheposition sind die Tragelemente in Bezug zur Mittelachse derart ausgerichtet, dass ein Stativbein von der Mittelachse in einer radialen Richtung und zwei weitere Stativbeine in die radial entgegengesetzte Richtung weisen, so dass das Stativ als Schulterstativ verwendbar ist. In der Gebrauchsposition sind die Tragelemente in Bezug zur Mittelachse derart gedreht, dass die an den Tragelementen vorgesehenen Stativbeine miteinander gleich grosse Winkel einschliessen, so dass das Stativ als Standstativ verwendet werden kann. Die Tragelemente sind in radialer Richtung der Mittelachse gleich lang ausgebildet. Zwei Tragelemente sind um die Mittelachse verdrehbar, während das dritte Tragelement mit der Mittelachse verdrehfest verbunden ist. Dadurch, dass die Tragelemente in Bezug zur Mittelachse in zwei diametral entgegengesetzte Richtungen weisen, benötigt dieses Stativ in der Ruheposition einen nicht unerheblichen Platzbedarf.

Der Erfindung liegt die Aufgabe zugrunde, ein Stativ der eingangs genannten Art zu schaffen, bei dem das optische Gerät an der Mittelachse des Stativs befestigbar ist, bei dem die Mittelachse in Bezug zum Stativ in axialer Richtung verstellbar ist, und das bei einem kleinen Platzbedarf in der Ruheposition eine gute Standstabilität in der Gebrauchsposition aufweist.

Diese Aufgabe wird erfindungsgemäss dadurch gelöst, dass alle Tragelemente in radialer Richtung der Mittelachse verschieden lang ausgebildet und um die Mittelachse derart verdrehbar sind, dass alle Tragelemente in der Ruheposition auf der gleichen Seite der Mittelachse angeordnet sind, dass jedes Tragelement ein hülsenförmiges Element und einen vom hülsenförmigen Element wegstehenden Arm zur Befestigung je eines Stativbeins aufweist, wobei die Arme der Tragelemente solche Längen aufweisen, dass die Differenz der Längen der in radialer Richtung der Mittelachse benachbarten Arme an die Querschnittsabmessungen der Stativbeine angepasst ist.

Das erfindungsgemässe Stativ benötigt in der Ruheposition nur einen kleinen Raumbedarf, so dass das erfindungsgemässe Stativ beispielsweise in einer Tragetasche raumsparend untergebracht werden kann. Der raumsparende Aufbau des Stativs ergibt sich insbesondere dadurch, dass die Stativbeine in der Ruheposition in einer gemeinsamen Ebene liegen. In dieser Ebene befindet sich in der Ruheposition auch die zentrale Mittelachse des Stativs, auf der ein optisches Gerät bzw. mehrere optische Geräte montiert sein können. Die in axialer Richtung der Mittelachse nebeneinander angeordneten hülsenförmigen Elemente sind um die Mittelachse verdrehbar gelagert, so dass sie zwischen der Ruheposition und der Gebrauchsposition verstellt werden können. In der Ruheposition weisen die von den hülsenförmigen Elementen in radialer Richtung wegstehenden Arme in eine gemeinsame Ebene. Dadurch, dass die Arme der Tragelemente ungleich lang sind, behindern sich die Stativbeine in der Ruheposition nicht gegeneinander. Die Stativbeine liegen in der Ruheposition des Stativs eng benachbart nebeneinander, da die Differenz der Längen der in axialer Richtung der Mittelachse benachbarten Arme der Tragelemente an die Querschnittsabmessungen der Stativbeine angepasst ist. Dadurch ergibt sich ein minimaler Raumbedarf für das zusammengelegte Stativ. Durch die ungleich lange Ausbildung der Arme der Tragelemente ergibt sich ausserdem der Vorteil, dass die Stativbeine in der auseinandergespreizten Gebrauchsposition von der Mittelachse ungleich weit enfernt sind, so dass relativ schwere und/oder relativ weit auskragende optische Geräte vorzugsweise in Richtung des radial längsten Armes orientiert werden, damit die Kippkante des Stativ in der Gebrauchsposition innerhalb der durch die auseinandergespreizten Stativbeine festgelegten Standfläche liegt. Dadurch wird auch bei weit auskragenden und relativ schweren optischen Geräten ein Umkippen des Stativs verhindert.

Die hülsenförmigen Elemente der Tragelemente sind vorzugsweise um eine zentrale Hülse verdrehbar, die zur Aufnahme der Mittelsäule vorgesehen ist, Dabei kann die Mittelsäule in der zentralen Hülse verschiebbar und mittels eines an der zentralen Hülse vorgesehenen Arretierorgans arretierbar sein. Als vorteilhaft hat es sich erwiesen, dass die Mittelsäule beim erfindungsgemässen Stativ teleskopartig verlängerbar ist. Durch eine derartige Ausbildung ergibt sich ein grosser Variationsbereich, innerhalb welchem am erfindungsgemässen Stativ optische Geräte angeornet werden können. Bei diesen optischen Geräten kann es sich um Foto-oder Filmkameras, Blitzlichteinrichtungen, Beleuchtungseinrichtungen, Einrichtungen zur Energieversorgung der zuletzt genannten Teile (sogenannte Powerpacks), od. dgl. handeln.

Mindestens zwei der Tragelemente können mit Anschlägen versehen sein, die zur Begrenzung der gegenseitigen Verdrehung der Tragelemente in Bezug zur zentralen Hülse dienen. Bei diesen Anschlägen kann es sich um Vorsprünge handeln, die an der Aussenseite der Hülse vorgesehen sind, und die in Rillen eingreifen, die an der Innenseite der hülsenförmigen Elemente der Tragelemente vorgesehen sind. Dabei brauchen die rillenförmigen Ausnehmungen in den hülsenförmigen Elementen nicht um den gesamten Umfang der Innenfläche jedes hülsenförmigen Elementes umlaufen. Vielmehr ist es ausreichend, wenn die rillenförmigen Ausnehmungen in den hülsenförmigen Elementen sich über eine bestimmte Länge erstrecken und durch Anschläge begrenzt sind, durch welche die Winkelbewegung der Tragelemente in Bezug zur Mittelachse derart begrenzt wird, dass die Standbeine in der Gebrauchsposition des Stativs ein gleichseitiges Mehreck bilden. Dabei befindet sich - wie bereits ausgeführt wurde - die Mittelachse in der Gebrauchsstellung des Stativs nicht im Schwerpunkt des zuletzt genannten Mehrecks.

Die Stativbeine sind vorzugsweise als Teleskopbeine ausgebildet, deren Länge einstellbar ist. Durch eine derartige, an sich bekannte Ausbildung der Stativbeine ist es möglich, Unebenheiten der Auflagefläche, auf welcher das Stativ angeordnet werden soll, in einfacher Weise auszugleichen.

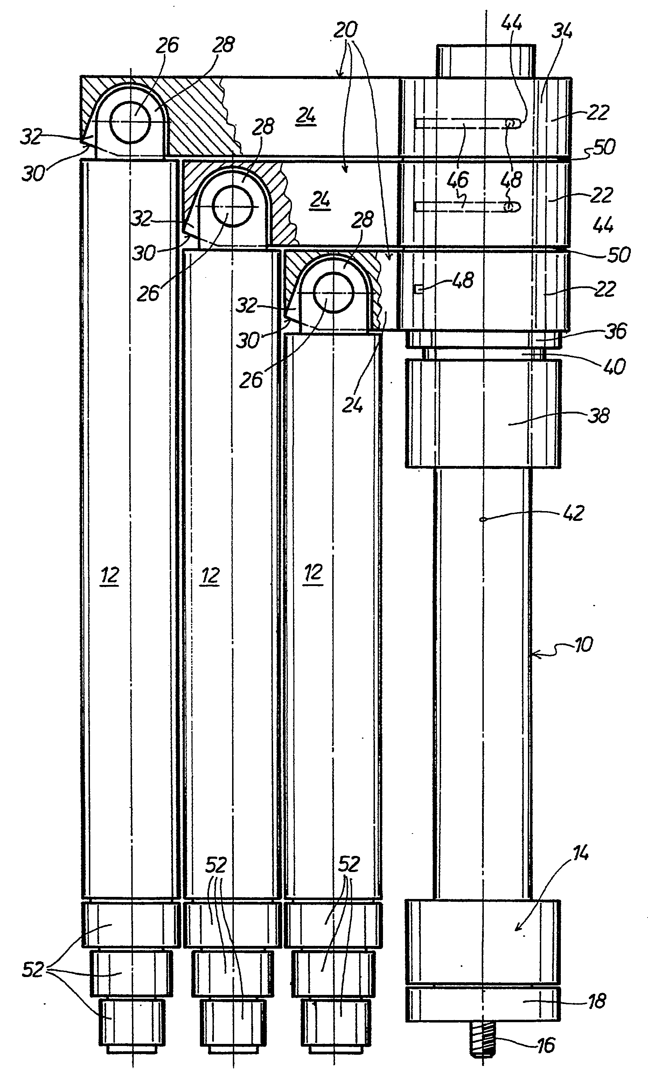

Ein Ausführungsbeispiel des erfindungsgemässen Stativs ist in der Zeichnung dargestellt und wird nachfolgend beschrieben:

Die Figur zeigt eine Seitenansicht eines Stativs, das eine Mittelsäule 10 und drei Stativbeine 12 aufweist. Die Mittelsäule 10 ist in dieser Figur nicht in der Gebrauchslage dargestellt, sondern in einer um 180° gedrehten Lagerstellung. Die Mittelsäule 10 ist teleskopartig ausgebildet, wobei zur Einstellung der Länge der Mittelsäule ein Arretierorgan 14 dient. Mit der Bezugsziffer 16 ist ein Gewinde zapfen bezeichnet, der von einem Auflageteller 18 der Mittelsäule 10 vorsteht. Der Gewindezapfen 16 weist ein genormtes Aussengewinde auf, so dass an ihm eine mit einem entsprechend genormten Innengewinde versehene Foto- oder Filmkamera montiert werden kann.

Das Stativ weist drei Tragelemente 20 auf, wobei jedes Tragelement 20 ein hülsenförmiges Element 22 und ein vom hülsenförmigen Element 22 in radialer Richtung wegstehenden Arm 24 aufweist. Die Arme 24 sind ungleich lang ausgebildet, wobei die Differenz der Längen benachbarter Arme 24 an die Querabmessung der Stativbeine 12 angepasst ist. An den Armen 24 sind die Stativbeine 12 schwenkbar gelagert, wobei zur Lagerung der Stativbeine 12 Lagerbolzen 26 vorgesehen sind, die sich durch die Arme 24 hindurcherstrecken. Die Stativbeine 12 sind mit Befestigungslaschen 28 versehen, durch welche sich die Lagerbolzen 26 hindurcherstrecken. Jeder Arm 24 der Tragelemente 20 weist eine Schrägfläche 30 auf, durch welche die Verschwenkung der Stativbeine 12 zwischen der dargestellten Ruheposition und einer aufgespreizten Gebrauchsposition möglich ist. Zur schwenkbaren Anordnung der Stativbeine 12 an den Armen 24 der Tragelemente 20 sind die Arme 24 mit Ausnehmungen 32 ausgebildet, in welche sich die Befestiungslaschen 28 hineinerstrecken.

Die hülsenförmigen Elemente 22 der Tragelemente 20 sind um eine zentrale Hülse 34 drehbar gelagert, wobei sich die Mittelsäule 10 durch den zentralen Hohlraum der Hülse 34 verschiebbar hindurcherstreckt. Die zentrale Hülse 34 weist eine Mutter 36 auf, durch welche eine axiale Verschiebung der zentralen Hülse 34 in Bezug zu den hülsenförmigen Elemente 22 der Tragelemente 20 verhindert wird. Mit der Bezugsziffer 38 ist ein Arretierelement bezeichnet, mit dessen Hilfe die Mittelsäule 10 in einer gewünschten Stellung relativ zur zentralen Hülse 34 und damit relativ zu den Tragelementen 20 festgestellt werden kann. Bei dem Arretierelement 38 handelt es sich um eine Überwurfmutter, die auf einen Gewindeansatz 40 aufschraubbar ist, der an der zentralen Hülse 34 vorgesehen ist. Das Arretierelement 38 weist mindestens eine (nicht dargestellte) konische Fläche auf, die mit einer konischen Gegenfläche der zentralen Hülse 34 zusammenwirkt, wenn das Arretierelement 38 um die Mittelachse 42 des Stativs gedreht wird.

Zur Begrenzung der Drehung der Tragelemente 20 um die Mittelachse 42 dienen Anschläge 44, die durch die Endabschnitte von rinnenförmigen Ausnehmungen 46 in der Innenfläche der hülsenförmigen Elemente 22 gebildet sind. In die rinnenförmigen Ausnehmungen 46 ragen Ansätze 48 hinein, die an der Außenfläche der zentralen Hülse 34 vorgesehen sind.

Mit der Bezugsziffer 50 sind Ringe bezeichnet, die zwischen benachbarten hülsenförmigen Elementen 22 der Tragelemente 20 angeordnet sind, um eine Reibung zwischen den Tragelementen 20 auf ein Minimum zu reduzieren.

Die Stativbeine 12 sind als Teleskopbeine ausgebildet. Zur Einstellung der Gesamtlänge jedes einzelnen Teleskopbeines 12 dienen Feststellorgane 52. Da derartige Teleskopbeine 12 allgemein bekannt sind, erübrigt es sich, die Wirkungsweise der Feststellorgane 52 detailliert zu beschreiben.

Im dargestellten Ausführungsbeispiel sind die Arme 24 der Tragelemente 20 derart ausgebildet, daß die Stativbeine 12 ungleich lang ausgebildet sein müssen. Selbstverstänlich ist es auch möglich, die Stativbeine 12 gleich lang auszubilden, wenn die Arme 24 der Tragelemente 20 mit entsprechenden abgewinkelten Teilen ausgebildet sind, an denen die Ausnehmungen 32 und die Lagerbolzen 26 vorgesehen sind. Die gleich lange Ausbildung der Stativbeine 12 weist den Vorteil auf, daß die Lagerhaltung beim Hersteller des erfindungsgemäßen Stativs erheblich reduziert ist.

**Patentansprüche**

1. Stativ für optische Geräte, mit Tragelementen (20), die an einer Mittelachse (42) in axialer Richtung nebeneinander angeordnet und um die Mittelachse (42) zwischen einer Ruheposition und einer Gebrauchsposition verdrehbar sind, wobei an den Tragelementen (20) Stativbeine (12) schwenkbar gelagert sind, die in der Ruheposition zur Mittelachse (42) zumindest annähernd parallel ausgerichtet sind und in einer Ebene liegen, und die in der Gebrauchsposition von den zugehörigen Tragelementen (20) weg spreizbar sind,

**dadurch gekennzeichnet,** daß alle Tragelemente (20) in radialer Richtung der Mittelachse (42) verschieden lang ausgebildet und um die Mittelachse (42) derart verdrehbar sind, daß alle Tragelemente (20) in der Ruheposition auf der gleichen Seite der Mittelachse (42) angeordnet sind, daß jedes Tragelement (20) ein hülsenförmiges Element (22) und einen vom hülsenförmigen Element (22) wegstehenden Arm (24) zur Befestigung je eines Stativbeins (12) aufweist, wobei die Arme (24) der Tragelemente (20) solche Längen aufweisen daß die Differenz der Längen der in axialer Richtung der Mittelachse (42) benachbarten Arme (24) an die Querschnittsabmessungen der Stativbeine (12) angepaßt ist.

2. Stativ nach Anspruch 1,
**dadurch gekennzeichnet,** daß die hülsenförmigen Elemente (22) der Tragelemente (20) um eine zentrale Hülse (34) verdrehbar sind, die zur Aufnahme der Mittelsäule (10) vorgesehen ist.

3. Stativ nach Anspruch 2,
**dadurch gekennzeichnet,** daß die Mittelsäule (10) in der zentralen Hülse (34) verschiebbar und mittels eines an der zentralen Hülse (34) vorgesehenen Arretierorgans (38) arretierbar ist.

4. Stativ nach Anspruch 2 oder 3,
**dadurch gekennzeichnet,** daß die Mittelsäule (10) teleskopartig verlängerbar ist.

5. Stativ nach einem der vorhergehenden Ansprüche,
**dadurch gekennzeichnet,** daß mindestens zwei Tragelemente (20) mit Anschlägen (44, 48) versehen sind, die zur Begrenzung der gegenseitigen Verdrehung der Tragelemente (20) in Bezug zur zentralen Hülse (34) dienen.

6. Stativ nach einem der vorhergehen Ansprüche,
**dadurch gekennzeichnet,** daß die Stativbeine (12) als Teleskopbeine ausgebildet sind, deren Länge einstellbar ist.

## Claims

1. Tripod for optical equipment, comprising support elements (20), which are arranged next to one another in the axial direction on a central axis (42) and can be rotated about the central axis (42) between a rest position and a position of use, there being swivellably mounted on the support elements (20) tripod legs (12) which are arranged at least approximately parallel to the central axis (42) in the rest position, and lie in a plane, and can be spread away from the associated support elements (20) in the position of use, characterized in that all support elements (20) are constructed with different lengths in the radial direction of the central axis (42) and can be rotated about the central axis (42) in such a way that all support elements (20) are arranged on the same side of the central axis (42) in the rest position, and that each support element (20) has a sleeve-shaped element (22) and an arm (24) standing away from the sleeve-shaped element (22) for securing one tripod leg (12) each, the arms (24) of the support elements (20) having lengths such that the difference of the lengths of the arms (21) adjacent in the axial direction of the central axis (42) is matched to the cross-sectional dimensions of the tripod legs (12).

2. Tripod according to Claim 1, characterized in that the sleeve-shaped elements (22) of the support elements (20) can be rotated about a central sleeve (34), which is provided for receiving the central column (10).

3. Tripod according to Claim 2, characterized in that the central column (10) can be slid in the central sleeve (34) and can be locked by means of a locking element (38) provided on the central sleeve (34).

4. Tripod according to Claim 2 or 3, characterized in that the central column (10) can be extended in a telescopic fashion.

5. Tripod according to one of the preceding claims, characterized in that at least two support elements (20) are provided with stops (44, 48), which serve to limit the mutual rotation of the support elements (20) relative to the central sleeve (34).

6. Tripod according to one of the preceding claims, characterized in that the tripod legs (12) are constructed as telescopic legs whose length can be adjusted.

## Revendications

1. Statif pour instruments d'optique du type comportant des éléments porteurs (20) répartis côte à en direction axiale sur un axe central (42) et pouvant pivoter autour de cet axe central entre une position de repos et une position d'utilisation, sur ces éléments porteurs (20) étant montés des pieds de statif (12) basculants qui, en position de repos sont au moins presque parallèles à l'axe central (42) et situés dans le même plan, et qui, en position d'utilisation sont déployés et éloignés des éléments porteurs (20), caractérisé en ce que, tous les éléments porteurs (20) ont des longueurs différentes en direction radiale par rapport à l'axe central (42) et sont pivotants autour de l'axe central (42), tous les éléments porteurs (20) sont, en position de repos, du même côté de l'axe central (42), chaque élément porteur (20) se compose d'un élément en forme de douille (22) et d'un bras (24) monté sur cet élément en forme de douille (22) pour al fixation d'un pied de statif, les bras (24) des éléments porteurs (20) ayant des longueurs telles que les différences entre les longueurs en direction axiale depuis l'axe central (42) de bras voisins soient adaptées aux dimensions en section transversale des pieds de statif.

2. Statif selon la revendication 1, caractérisé en ce que les éléments en forme de douille (22) des éléments porteurs (23) sont pivotants autour d'une douille centrale (34) prévue pour recevoir la colonne centrale (10).

3. Statif selon la revendication 2, caractérisé en ce que la colonne centrale (10) est coulissante dans la douille centrale (34) et peut être arrêtée au moyen d'un organe d'arrêt (38) prévu sur la douille centrale (34).

4. Statif selon l'une des revendications 2 et 3, caractérisé en ce que la colonne centrale est allongeable télescopiquement.

5. Statif selon l'une quelconque des revendications précédentes, caractérisé en ce que au moins deux éléments porteurs (20) sont munies de butées (44, 48) servant à délimiter la rotation relative des éléments porteurs (20) par rapport à la douille centrale (34).

6. Statif selon l'une quelconque des revendication précédentes, caractérisé en ce que les pieds du statif (12) sont des pieds télescopiques de longueur réglable.